# EUROPÄISCHE PATENTSCHRIFT

(11) **EP 0 992 661 B1**
(45) Veröffentlichungstag und Bekanntmachung des Hinweises auf die Patenterteilung: **03.12.2003**
(21) Anmeldenummer: 98810998.9
(22) Anmeldetag: 05.10.1998
(51) Int. Cl.: F02C 7/264, F23D 11/42

(54) **Zündbrenner für eine Brennkammer**
Ignition burner for a combustion chamber
Brûleur d'allumage pour une chambre de combustion

(43) Veröffentlichungstag der Anmeldung: 12.04.2000
(73) Patentinhaber: ALSTOM (Switzerland) Ltd, 5401 Baden (CH)
(72) Erfinder: Stalder, Marcel, 5313 Klingnau (CH); Sybon, Günter, Dr., 5412 Gebenstorf (CH)

(56) Entgegenhaltungen:
- WO-A-96/39578
- US-A- 3 954 389

## Beschreibung

### Technisches Gebiet

Die vorliegende Erfindung betrifft eine Zündvorrichtung für einen Wärmeerzeuger, bestehend aus einer Brenngaszuführung, einer Luftzuführung, einem Flammrohr und einem Zünder, wobei der Zünder in einem vom Flammrohr räumlich abgesetzten durchströmten Zündraum angeordnet ist, welcher Zündraum in dem Flammrohr mündet.

### Stand der Technik

Die Zündung der Flammen in Wärmeerzeugern, wie beispielsweise in Gasturbinenbrennkammern, kann beispielsweise durch eine Zünd- oder Glühkerze erfolgen, wie unter anderem von A. Lefebvre in "Gas Turbine Combustion" (Arthur H. Lefebvre: *Gas Turbine Combustion*, Hemisphere Publishing Corporation, 1983) beschrieben.

Voraussetzung für die Funktion der Zündvorrichtung ist selbstverständlich, dass am Zünder Bedingungen vorliegen, die das Entstehen einer stabilen und ausreichend kräftigen Zündflamme erst ermöglichen. Hierbei ist insbesondere die Einstellung der Brennstoff-Luftverhältnisses am Zünder sowie einer zweckmässigen Strömungsgeschwindigkeit im Bereich des Zünders zu nennen.

Insbesondere in den Brennkammern von Gasturbinen lassen sich diese Forderungen oft nur durch den Einsatz spezieller Zündbrenner erfüllen. Die Platzierung des Zünders unmittelbar im Brennraum verbietet sich aufgrund der oben erwähnten Kriterien von selbst. US 3,954,389 und WO 96/39578 beschreiben Zündbrenner für Flüssigbrennstoffe. In beiden Fällen beruht das Funktionsprinzip darauf, über spezielle Brennstöffdüsen kleine Mengen von Brennstoff mit einer Zerstäubungsluftmenge zu zerstäuben, und den so entstehenden Flüssigbrennstoffnebel dem eigentlichen Zünder zuzuführen.

Häufig wird der Zünder in einem kleinen Zündraum untergebracht, so dass nur ein kleines Volumen durch die Initialzündung entflammt werden muss. In einem stromab dieses Zündraums gelegenen Flammrohr entsteht sukzessive eine stabile Zündflamme. Selbst dann werden befriedigende Ergebnisse oft nur mit erheblichem Aufwand erzielt, beispielsweise durch den Einsatz von Propangas-gespiesenen Zündgasversorgungssystemen.

Soll hingegen direkt mit Erdgas oder gar mit niederkalorischen Gasen gezündet werden, ist der Bereich des Brennstoff-Luft-Verhältnisses, in dem eine zuverlässige Funktion sichergestellt ist, sehr eng eingegrenzt. Entsprechend müssen die Gas- und Luftzufuhr zum Zünder sehr enge Toleranzen aufweisen, und der Gasvordruck muss sorgfältig angepasst werden.

Unter den Bedingungen, die in den Brennkammern moderner Gasturbinen vorliegen, erfordern die Zündsysteme zur Erhaltung ihrer zuverlässigen Funktion über einen langen Zeitraum einen hohen Wartungsaufwand.

### Darstellung der Erfindung

Hier will die Erfindung Abhilfe schaffen. Der Erfindung ist also die Aufgabe zugrundegelegt, bei einer Zündvorrichtung für einen Wärmeerzeuger, bestehend aus einer Brenngaszuführung, einer Luftzuführung, einem Flammrohr und einem Zünder, wobei der Zünder in einem vom Flammrohr räumlich abgesetzten durchströmten Zündraum angeordnet ist, welcher Zündraum im Flammrohr mündet, auch ohne die Einhaltung engster Toleranzen in den Versorgungskanälen für Brenngas und Luft gute Zündbedingungen zu gewährleisten.

Erfindungsgemäss wird diese Aufgabe dadurch gelöst, dass Brenngaszuführung und Luftzuführung im Flammrohr münden, und, dass der Zündraum durch mindestens einen Verbindungskanal mit der Brenngaszuführung und der Luftzuführung verbunden ist.

Durch diese Ausführung können die Luft- und Brennstoffversorgung des Zünders selbst wirkungsvoll von derjenigen der gesamten Zündeinrichtung entkoppelt werden. Werden nämlich die Querschnitte von Gas- und Luftleitungen hinreichend gross gewählt, resultiert ein geringes Druckgefälle zwischen den Zuführungsleitungen und dem Flammrohr respektive dem Zündraum. Damit aber sind auch die Druckgefälle über die Verbindungskanäle des Zündraumes mit den Zuführungen für Luft und Brenngas nahezu gleich, und klein. Aufgrund des kleinen Druckgefälles können die Querschnitte der Verbindungskanäle gross gewählt werden, ohne die Strömungsgeschwindigkeit in der Umgebung des Zünders über ein zulässiges und wünschenswertes Mass zu steigern. In Folge sinkt die Sensitivität der durchgesetzten Massenströme auf Fertigungstoleranzen. Zum anderen wird dadurch, dass die Druckgefälle über alle Verbindungskanäle nicht signifikant unterschiedlich sind, das Brennstoff-Luft-Verhältnis im Zündraum wesentlich nur durch das Querschnittsverhältnis der Verbindungskanäle für Luft und Brenngas bestimmt.

Die Möglichkeit, durch eine düsen- oder diffusorförmige Geometrie der Mündungen von Brenngas- und Luftzuführung nachhaltig Einfluss auf die Durchströmung des Zündraums zu nehmen, ist für den Fachmann ohne weiteres nachvollziehbar.

Bei erfindungsgemässer Ausführung einer Zündeinrichtung wird die Umströmung des Zünders mit Luft und Brenngas wirkungsvoll von Parametern wie dem Druck im Brennraum und dem Vordruck von Luft und Brenngas entkoppelt. Damit können gute Zündbedingungen unmittelbar am Zünder über einen weiten Betriebsbereich der Zündeinrichtung gewährleistet werden.

Weiterhin ist festzustellen, dass der Zünder selbst nur ein kleines Gemischvolumen entzünden muss. Daher wird die für eine sichere Initialzündung minimal aufzuwendende Energie verringert. Die so entstehende Pilotflamme tritt aus dem Zündraum in das Flammrohr ein, wo sie das dort vorhandene Brennstoff-Luft-Gemisch entzündet, wodurch schliesslich die eigentliche Zündflamme für den gesamten Brennraum entsteht.

Durch eine entsprechende Gestaltung des Zündraumes und der Verbindungskanäle zu demselben kann weiterhin auch die Intensität der Pilotflamme beeinflusst werden, wie im nachfolgenden Ausführungsbeispiel erläutert wird.

### Kurze Beschreibung der Zeichnung

Nachfolgend wird die Erfindung anhand der Zeichnung näher erläutert. Es zeigt
Fig. 1 ein Beispiel für die erfindungsgemässe Ausführung einer Zündeinrichtung mit allen wesentlichen Merkmalen.
Fig. 2 und Fig. 3 weitere Beispiele für die Ausgestaltung des Zündraumes.

### Weg zur Ausführung der Erfindung

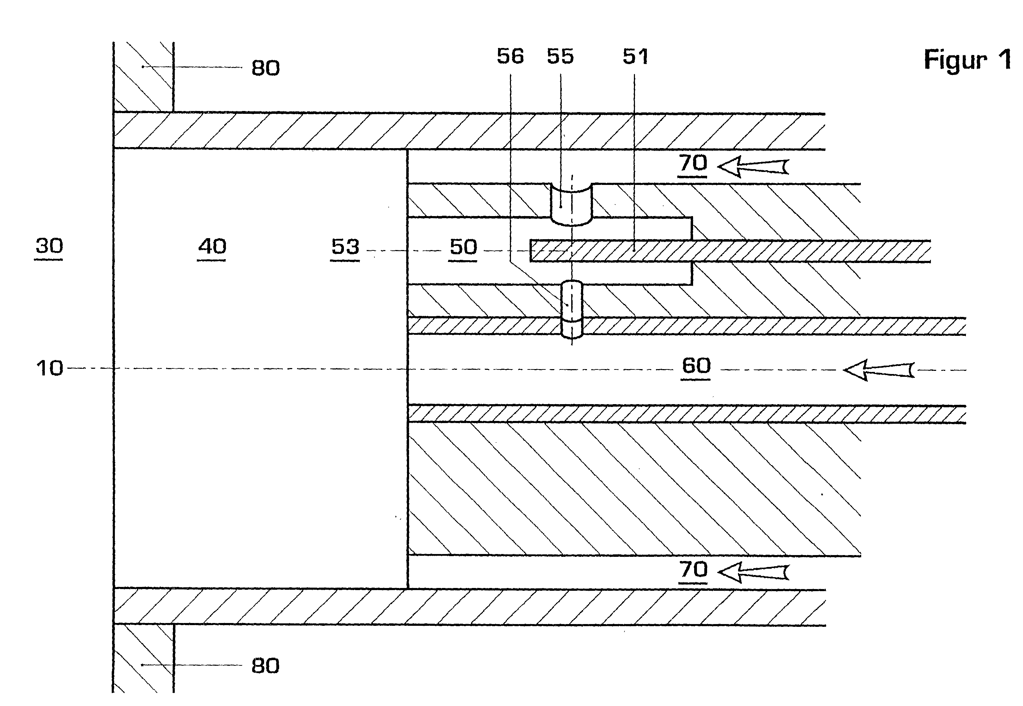

Ein Beispiel für eine erfindungsgemässe Zündeinrichtung ist in Fig. 1 dargestellt. Die Zündeinrichtung ist an der Wand 80 eines Brennraumes montiert. Das Flammrohr 40 ist zum Inneren des Brennraumes 30 hin offen.

Über eine oder mehrere Brenngasleitungen 60 wird dem Flammrohr Brenngas zugeführt, während die Luftversorgung über die Kanäle 70 erfolgt. Die Luftzuführung kann dabei auch, wie dargestellt, über einen Ringspalt 70 erfolgen, welcher Gaszuführung 60 und Zündraum 50 umschliesst. Auf der Stirnseite des Flammrohres 40 befindet sich der Zündraum 50, in dessen Innerem der Zünder 51 angeordnet ist. Der Zündraum 50 ist durch mindestens einen Verbindungskanal 55, 56 mit der Luftversorgung 70 und der Brenngasversorgung 60 verbunden. Die Verbindungskanäle 55, 56 können selbstverständlich auch einen Winkel mit der Achse 53 des Zündraums 50, oder einen Lateralversatz aufweisen, um ein zweckmässiges Strömungsfeld im Zündraum zu erzeugen.

Bei einer Beaufschlagung der Brenngas- und Luftzuführungen 60, 70 mit Brenngas und Luft strömen diese grösstenteils in das Flammrohr 40 ein. Ein Teilstrom jeden Mediums strömt durch die Versorgungsöffnungen 55, 56 in den Zündraum 50 ein und kann dort mittels des Zünders 51, beispielsweise einer Zündkerze, entzündet werden. Zunächst muss im Zündraum 50 nur eine verhältnismässig kleine Menge brennbaren Gemisches entzündet werden, wobei durch das Querschnittsverhältnis der Versorgungsöffnungen 55, 56 zueinander die Stöchiometrie des im Zündraum vorhandenen Gemisches unabhängig von anderen Parametern eingestellt werden kann. Zudem ist auch die Strömungsgeschwindigkeit im Zündraum 50 verhältnismässig gering. Daher wird auch mit kleinen Zündenergien eine sichere Zündung erreicht. Die so entstehende Pilotflamme, deren Intensität durch die Geometrie des Zündraumes beeinflusst werden kann, tritt aus dem Zündraum 50 in das Flammrohr 40 ein. Das dort befindliche Brenngas wird durch die Pilotflamme in einem wesentlich grösseren Konzentrationsbereich zuverlässig entzündet, als dies der Fall wäre, wenn hier nur die geringe, beispielsweise durch eine Zündkerze oder Glühkerze erzeugte Zündenergie zur Verfügung stände. Im Flammrohr 40 wird nun die eigentliche Zündflamme erzeugt, die in den Brennraum 30 austritt, und eine hinreichende Intensität aufweist, um dort durch Querzündung zu anderen Brennern eine sichere Zündung im gesamten Wärmeerzeuger zu gewährleisten.

Die in Fig. 1 dargestellte Anordnung der Brenngas- und Luftversorgung ist unter keinen Umständen einschränkend zu verstehen. So kann die Brenngaszuführung 60 auch dezentral angeordnet sein, oder es können, falls sich dies als zweckmässig erweist, auch mehrere Brenngaszuführungen zentral oder dezentral, auch unter einem Winkel gegen die Achse 10 der Zündvorrichtung angeordnet sein. Eine analoge Aussage gilt selbstverständlich auch für die Luftzuführungen 70. Hingegen ist es bei der dargestellten getrennten Luft- und Brenngasversorgung zweckmässig, den Zündraum 50 zwischen der Mündung einer Brenngaszuführung 60 und einer Luftzuführung 70 in das Flammrohr münden zu lassen: Aufgrund des dort vorhandenen Gradienten des Brennstoff-Luft-Verhältnisses trifft die Pilotflamme mit Sicherheit auf einen Bereich, in dem besonders zündfähiges Gemisch vorliegt. Durch dieses Funktionsprinzip wird über einen besonders grossen Bereich des Brennstoff-Luft-Verhältnisses der Zündeinrichtung eine zuverlässige Zündung erreicht.

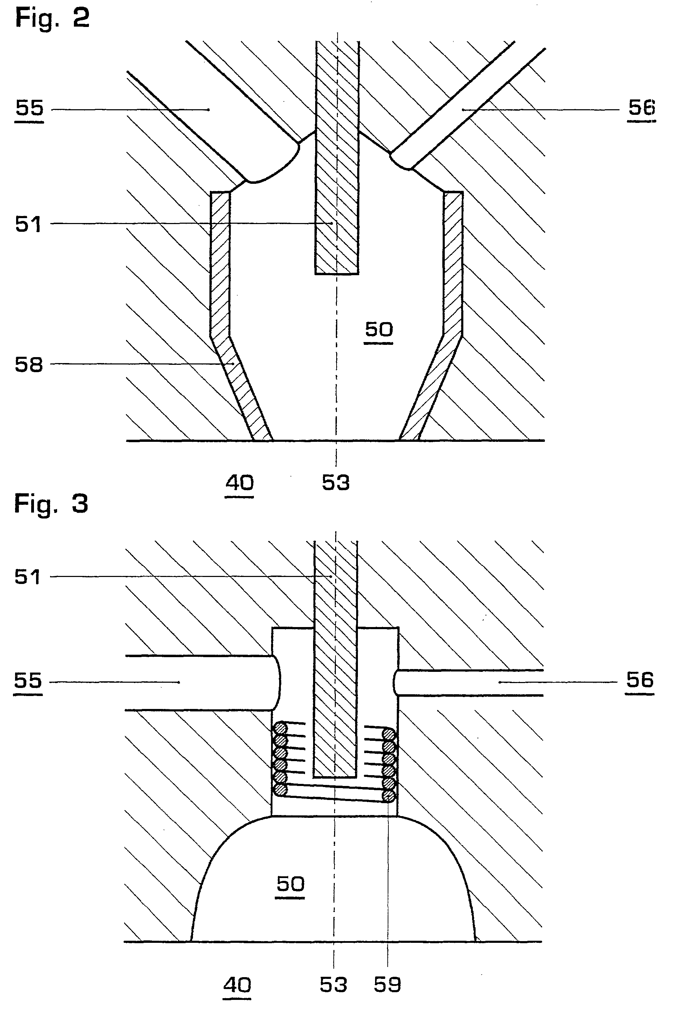

Die in Fig. 1 dargestellte zylindrische Form des Zündraums ist ebenfalls nicht zwingend; wie oben angedeutet, kann hingegen durch die Ausgestaltung des Zündraumes die Pilotflamme beeinflusst werden. Bei der in Fig. 2 dargestellten Geometrie wird zudem das entzündete Gemischvolumen im Verhältnis zur Oberfläche deutlich vergrössert, wodurch die Wärmeverluste an die kalten Wände verringert werden. Unterstützend wirkt auch die Verwendung einer Wärmedämmschicht 58 auf der Wand des Zündraums. Ebenso wäre es im Extremfall vorstellbar, die relativ kleinen Wandflächen des Zündraums vorzuheizen. Diese Möglichkeit ist in Fig. 3 durch eine Heizwendel 59 angedeutet.

Ebensowenig ist die dargestellte zylindrische Form des Flammrohres 40 zwingend; es können sich unterschiedliche Geometrien desselben als zweckmässig erweisen.

### Bezugszeichenliste

- 10: Mittelachse der Zündvorrichtung
- 30: Brennraum
- 40: Flammrohr
- 50: Zündraum
- 51: Zünder
- 53: Symmetrieachse des Zünders
- 55: Verbindungskanal zwischen Luftzuführung und Zündraum
- 56: Verbindungskanal zwischen Brenngaszuführung und Zündraum
- 58: Wärmedämmschicht
- 59: Heizeinrichtung
- 60: Brenngaszuführung
- 70: Luftzuführung
- 80: Brennraumwand

## Patentansprüche

1. Zündvorrichtung für einen Wärmeerzeuger, umfassend ein Flammrohr (40), einen von Flammrohr räumlich abgesetzten Zündraum (50), einen in dem Zündraum angeordneten Zünder (51 ), eine Brenngaszuführung (60) und eine Luftzuführung (70), wobei das Flammrohr eine Mündung zur Verbindung mit einem Brennraum (30) aufweist, der Zündraum eine Mündung in das Flammrohr (40) aufweist, **dadurch gekennzeichnet, dass** der Zündraum über jeweils mindestens einen Verbindungskanal (55, 56) mit der Brenngaszuführung sowie mit der Luftzuführung verbunden ist, welche Brenngaszuführung und Luftzuführung stromab der Abzweigung des jeweiligen Verbindungskanals frei und unmittelbar in das Flammrohr münden.

2. Zündvorrichtung nach Anspruch 1, **dadurch gekennzeichnet, dass** die Mündung des Zündraumes (50) in das Flammrohr (40) zwischen der Mündung einer Gaszuführung (60) und der Mündung einer Luftzuführung (70) in das Flammrohr (40) angeordnet ist.

3. Zündvorrichtung nach einem der Ansprüche 1 oder 2, **dadurch gekennzeichnet, dass** der Zündraum (50) mit einer Wärmedämmschicht (58) ausgekleidet ist.

4. Zündvorrichtung nach einem der Ansprüche 1 bis 3, **dadurch gekennzeichnet, dass** der Zündraum (50) mit einer Vorheizeinrichtung (59) versehen ist.

5. Zündvorrichtung nach einem der Ansprüche 1 bis 4, **dadurch gekennzeichnet, dass** die Luftzuführung (70) als ein die Gaszuführung (60) und den Zündraum (50) umschliessender Ringspalt ausgebildet ist.

6. Zündvorrichtung nach einem der Ansprüche 1 bis 4, **dadurch gekennzeichnet, dass** mehrere Luftzuführungen (70) in das Flammrohr (40) münden, welche um eine oder mehrere Gaszuführungen (60) herum angeordnet sind.

## Claims

1. Ignition appliance for a heat generator, comprising a flame tube (40), an ignition space (50) which is spatially remote from the flame tube, an igniter (51) which is arranged in the ignition space, a fuel gas supply passage (60) and an air supply passage (70), the flame tube having an opening for the connection to a combustion space (30), the ignition space having an opening into the flame tube (40), **characterized in that** the ignition space is connected by in each case at least one connecting duct (55, 56) to the fuel gas supply passage and to the air supply passage, which fuel gas supply passage and air supply passage open freely and directly into the flame tube downstream of the branch of the respective connecting duct.

2. Ignition appliance according to Claim 1, **characterized in that** the opening of the ignition space (50) into the flame tube (40) is arranged between the opening of a gas supply passage (60) and the opening of an air supply passage (70) into the flame tube (40).

3. Ignition appliance according to one of Claims 1 or 2, **characterized in that** the ignition space (50) is lined with a heat insulating layer (58).

4. Ignition appliance according to one of Claims 1 to 3, **characterized in that** the ignition space (50) is provided with a preheating device (59).

5. Ignition appliance according to one of Claims 1 to 4, **characterized in that** the air supply passage (70) is configured as an annular gap surrounding the gas supply passage (60) and the ignition space (50).

6. Ignition appliance according to one of Claims 1 to 4, **characterized in that** a plurality of air supply passages (70) open into the flame tube (40), which air supply passages (70) are arranged around one or more gas supply passages (60).

## Revendications

1. Dispositif d'allumage pour générateur de chaleur, comprenant un tube à flamme (40), une chambre d'allumage (50) située à distance dans l'espace par rapport au tube à flamme, un allumeur (51) disposé dans la chambre d'allumage, une conduite de gaz de combustion (60) et une conduite d'air (70) , le tube à flamme présentant une embouchure pour sa liaison avec une chambre de combustion (30), la chambre de combustion présentant une embouchure vers le tube à flamme (40), **caractérisé en ce que** la chambre d'allumage est reliée par l'intermédiaire de respectivement au moins un canal de liaison (55, 56) à la conduite de gaz de combustion ainsi qu'à la conduite d'air, lesquelles conduites de gaz de combustion et d'air débouchent, en aval de la bifurcation du canal de liaison respectif, librement et directement dans le tube à flamme.

2. Dispositif d'allumage selon la revendication 1, **caractérisé en ce que** l'embouchure de la chambre d'allumage (50) vers le tube à flamme (40) est disposée entre l'embouchure d'une conduite de gaz (60) et l'embouchure d'une conduite d'air (70) vers le tube à flamme (40).

3. Dispositif d'allumage selon l'une quelconque des revendications 1 ou 2, **caractérisé en ce que** la chambre d'allumage (50) est revêtue d'une couche d'isolation thermique (58).

4. Dispositif d'allumage selon l'une quelconque des revendications 1 à 3, **caractérisé en ce que** la chambre d'allumage (50) est équipée d'un dispositif de préchauffage (59).

5. Dispositif d'allumage selon l'une quelconque des revendications 1 à 4, **caractérisé en ce que** la conduite d'air (70). se présente sous forme d'une . fente annulaire entourant la conduite de gaz (60) et la chambre d'allumage (50).

6. Dispositif d'allumage selon l'une quelconque des revendications 1 à 4, **caractérisé en ce que** plusieurs conduites d'air (70) débouchent dans le tube à flamme (40), ces conduites étant disposées autour d'une ou plusieurs conduites de gaz (60).
